# EUROPEAN PATENT SPECIFICATION

(11) **EP 2 259 041 B1**
(45) Date of publication and mention of the grant of the patent: **27.11.2013**
(21) Application number: 10164670.1
(22) Date of filing: 01.06.2010
(51) Int. Cl.: G01M 17/06, B62D 5/04

(54) **Universal test device for electric power steering units**
Universalvorrichtung zum Testen von Servolenkanordnungen
Dispositif universel pour tester des ensembles de direction assistée électrique

(30) Priority: 05.06.2009 IT MI20090980
(43) Date of publication of application: 08.12.2010
(73) Proprietor: Emmetec S.r.l., 21100 Varese (IT)
(72) Inventor: Maraffino, Davide, 21020 Ternate (VA) (IT); Krause, Bodo, 21020 Monvalle (VA) (IT)
(74) Representative: Vanosi, Adelio Valeriano

(56) References cited:
- EP-A2- 1 972 524
- CN-A- 101 135 611
- CN-A- 101 187 598
- CN-A- 101 393 081
- CN-Y- 201 184 845
- JP-A- 4 218 746
- JP-A- 2003 261 046
- KR-A- 20030 060 577

## Description

The present invention refers to a test device for electric power steering units.

In particular, the present invention regards a test device for power steering units that allows their operation to be tested after they have been removed from motor vehicles, for example, in the field of used parts overhauling, or in repair work.

Currently, there are some companies specialized in the overhaul of electric power steering units that have fitted out test-beds composed of cars, purchased from car breakers or similar, complete with engine block, control units, electrical system and some ancillaries, on which the power steering units are installed, complete with steering-column, in order to test their operation.

In practice, each power steering unit is mounted on a 'test car' identical to that for which the unit was designed. The power steering to be overhauled is connected to the car's electrical system and then tested according to standard procedures.

The main drawback of the known art is that the overhaul company must have a model of car in-house for each type of steering assembly that it intends to overhaul.

For example, to overhaul the power steering unit for a FIAT PUNTO, it would be necessary to have a FIAT PUNTO in stock, of the corresponding engine capacity and accessory level, which would serve as a "test-bed" for the steering assembly in question.

Given the impossibility of providing a fleet of 'test cars' substantially corresponding to those present on the market, repairers have specialized in the repair of only a few types of steering assembly, in substance, those of the most commercially popular cars, with a larger demand for overhauled spare parts and greater availability of 'wrecks' on which to test the steering assemblies.

It follows that the majority of steering assemblies that potentially could be overhauled, are thrown away instead because no test-beds exist that would allow them to be repaired and tested.

The object of the present invention is therefore that of embodying a test device for power steering units that allows a large number of types of power steering units to be tested with a single machine or test-bed.

KR (A) 2003 0060577 discloses a test device with the features of the preamble of claim 1.

These and other objects are achieved by embodying a test device for power steering units according to the technical precepts of the enclosed claims.

Further characteristics and advantages of the invention shall become evident from the description of a preferred, but not exclusive embodiment of the test device for power steering units, shown by way of example, and therefore not limitative, in the enclosed drawings, where:

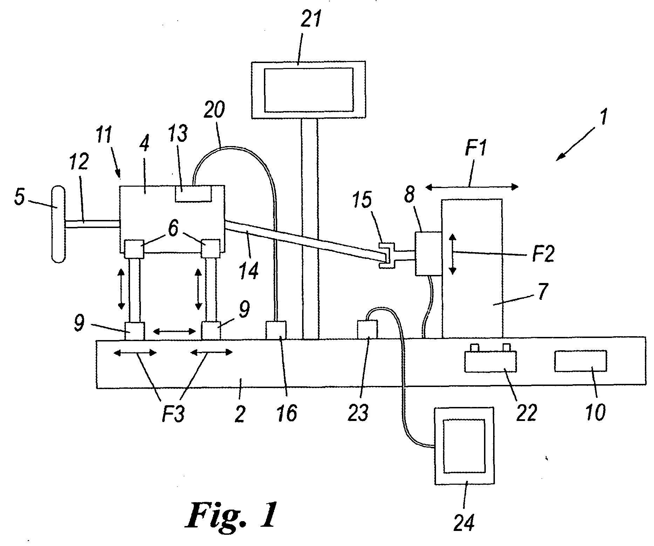

Figure 1 is a schematic lateral view of a device according to the present invention,
Figure 2 is schematic front view of an alternative embodiment of the device according to the present invention, and
Figure 3 is a schematic view seen from above of the device in Figure 2.

With reference to the indicated figures, a test device for power steering units 11 is shown and indicated as a whole by reference numeral 1.

The device comprises a bed 2 on which a column 7 is constrained to the bed itself in a horizontally mobile manner (F1 arrow). Adjustment of the position of the column 7 is conveniently carried out by means of a conventional coupling with an endless screw associated with a control knob (not shown).

The column 7 supports a rotation and torque sensor 8, constrained in a vertically mobile manner (F2 arrow), which conveniently has an integrated brake. The sensor 8 and the brake associated with it are connected to and controlled by a control unit 10, preferably of the PLC type. The position of the sensor 8 is adjustable in height by means of a control knob coupled with an endless screw (not shown) in this case as well. The rotation and torque sensor is made to detect a force (torque) and movement (rotation) generated by the power steering unit.

Four supports 9, able to support a conventional electric power steering unit 11 to be tested, facing the column 7 and fixed to the bed 2 in adjustable positions (F3 arrows), are provided.

The unit 11 normally comprises a steering wheel 5 from which a steering shaft 12 extends to the entrance of a reducer coupled to an electric motor 4. The electric motor 4 is governed by a controller 13 that, based on the rotation applied to the steering shaft 12 by a user, imposes rotational torque on the drive shaft 14. Usually, a rotation sensor and a torque sensor are provided on the steering shaft that, when interfaced with the controller, allow the motor 4 to be controlled for operating the drive shaft 14.

The unit 11 to be tested can obviously be of any type; here, a particularly commonplace one is shown by way of example.

This electric power steering unit 11 is secured to the supports 9 in a removable manner via universal coupling means 6 (for example, vices). The position of the supports 9 on the bed and the distance between them is adjustable (F3 arrows) so as to permit the clamping of any type of power steering unit. The universal coupling means 6 conveniently block the unit close to the motor 4, which is the heaviest part.
Four supports have been provided in the described embodiment, but their number can vary according to the various needs.

The drive shaft 14 of the unit is fixed to the rotation and torque sensor 8 in the conventional manner, for example, by means of a universal joint 15.

An input socket 16 interfaced with the control unit 10 is provided on the bed 2 for a cable 20 fitted with suitable electrical connectors for connecting with those originally provided on the power steering unit 11 and, in particular, on the controller 13. A specific cable 20 shall therefore be used for each type of power steering unit 11 that it is wished to test.

The cable conveniently has a chip that will allow the control unit 10 to identify it for specific use only on certain models of power steering unit 11.

The cable 20 provides for both allowing dialogue between the controller 13 and the control unit and actually powering the motor 4.

In completing the description, it should be noted that the device has a video terminal 21, preferably of the 'touch screen' type, for displaying information sent from the control unit 10 and for a user to control the entire test device 1.

In addition, the device has a battery 22, for example, of the conventional type for automotive usage, which is used to power the entire system and, in particular, to power the motor 4. The presence of the battery is important to maintain, in an inexpensive and reliable manner, a substantially constant supply voltage, which is fundamental for the reliability of the diagnostic tests carried out on the power steering unit 11 using the device 1.

The operation of the above-described invention is substantially as follows.

Once the power steering unit 11 to be tested (for example, that of a petrol-engined Fiat Punto 1.2) is secured to the device via the vices 6, the position of the column 7 is adjusted and the drive shaft 14 is fixed to the rotation and torque sensor 8.

Then, the cable 20 suitable for the specific power steering unit is obtained and connected to the socket 16 and the power steering unit 11 (specifically, to the controller and power supply lines of the motor 4).

Once the connections have been made, the control unit 10 is switched on and the make of motor vehicle to which the power steering unit 11 belongs is selected on the video terminal 21. In the case shown, the Fiat make and the Punto model with a 1.2 litre petrol engine are chosen. Depending on the types of power steering unit 11 made by the various car manufacturers, it is possible to enter other data necessary to unambiguously identify the unit, this data being, for example, the year of vehicle manufacture, the serial number, etc.

Once the required data has been provided to the control unit 10, the latter checks if an identification chip is present in the cable 20 and, in this case, checks that the cable utilized corresponds to that effectively suitable for the chosen vehicle, generating an error message if this is not so.

Having checked that the cable is correct, the control unit 10 runs a specific program for the chosen vehicle, consequently simulating the part of the electrical system present on the chosen car necessary for the correct operation of the controller 13 installed on the power steering unit.

Essentially, the control unit 10 simulates the electrical system of the chosen car so that the controller 13 'thinks' it is connected to the electrical system of the actual vehicle and can therefore operate correctly.

In particular, the control unit 10 simulates all the electrical impulses, data and whatever else is necessary to make the controller 13 operate in a fully correct manner. Thus, for example, according to the type of car chosen, the control unit 10 will simulate a PWM system, a CAN BUS system, direct current, an analogue signal, a digital signal, or a simple feed in which only essential data for the operation of the power steering unit 11 will be supplied. By way of example, the simulated system could provide data such as the vehicle's power on/off state, ignition on/off, engine on/off, City button on/off, and the varying speed from standstill to 200km/h.

In addition, the control unit 10 can set the braking percentage of the brake integrated in the rotation and torque sensor 8, in particular, from 0% to 100% braking.

The virtual system created by the control unit 10 shall also be able to receive any data that is normally transmitted from the unit 11 to the car's onboard system (for example, for the management of electronic systems such as ABS, EPS or similar), such as, for example, the steering angle and the torque acting on the steering wheel. Obviously, this data will different and specific depending on the model of car.

Once the power steering unit 11, opportunely connected to the device 1, is able to operate, an operator can manually perform a series of tests on it to diagnose any problems, thus allowing the unit to be overhauled.

In particular, the diagnosis of possible problems could be aided by certain data collected by the control unit 10 and displayed on the screen regarding the test in course and, in particular, regarding the controller 13 and/or the status of the means of sensing associated with the control unit 10.

For example, this data could include the effective steering angle (read by the sensor 8), the imparted steering angle (read by the controller 13), the number of steering wheel turns (derived from the reading of the controller 13), the output torque (read by the sensor 8), the battery voltage and the current absorbed by the motor (derived from a voltmeter and amperometer associated with the control unit 10).

Based in the data derived from the various tests it will be possible, in the conventional manner, to trace possible problems in the unit 11, or to certify its efficiency.

The control unit 10 conveniently provides for a memory where it will be possible to save the data regarding a test in course, when indicated by the user or automatically, which can then be subsequently consulted or printed out.

The device 1 could also provide a diagnostic socket 23, of the conventional type installed on cars, for connecting a conventional scanner 24. By interfacing with the electronic system simulated by the unit 10, this scanner (a diagnostic device, such as the AXONE DIRECT produced by TEXA for example, or any device from similar companies) will be able to collect data from the controller 13 and, if necessary, adjust the 'zero' of the sensors associated with the controller 13 itself.

Basically, the scanner, connected to the socket 23, will be able to carry out the same tests and collect the same data that would be read in the case where it was connected to the diagnostic port of a car on which the power steering unit 11 is installed.

In an improved form of the above-described device, it has an integrated actuator (a motor for example) able to drive the rotation of the steering shaft 12 of the unit 11. The actuator, opportunely governed by the control unit 11, carries out an operational test on the same power steering unit 11 according to a programmable sequence, automatically storing the data regarding the various states of the sensors in the positions and in the movements imposed by the actuator.

This allows a data report to be provided automatically and devoid of possible human errors, which can help diagnose the unit 11.

One of the many possible sequences performed by the actuator could be, for example:
- Turn the wheel full-lock to the right and the left with the engine switched off to measure the mechanical forces
- Turn the wheel full-lock to the right and the left with the engine on, at a speed of 0 km/h
- Turn the wheel full-lock to the right and the left with the engine on, speed of 0 km/h and with CITY mode switched on
- Turn the wheel full-lock to the right and the left with the engine on, speed of 40 km/h and with CITY mode switched on
- Turn the wheel full-lock to the right and the left with the engine on, speed of 60 km/h and with CITY mode switched on
- Turn the wheel full-lock to the right and the left with the engine on, speed of 100 km/h and with CITY mode switched on
These tests can continue at all the speeds of the car to be diagnosed.
At the end of each phase, the data read from the sensors will be automatically saved and made available in an easy-to-consult report.

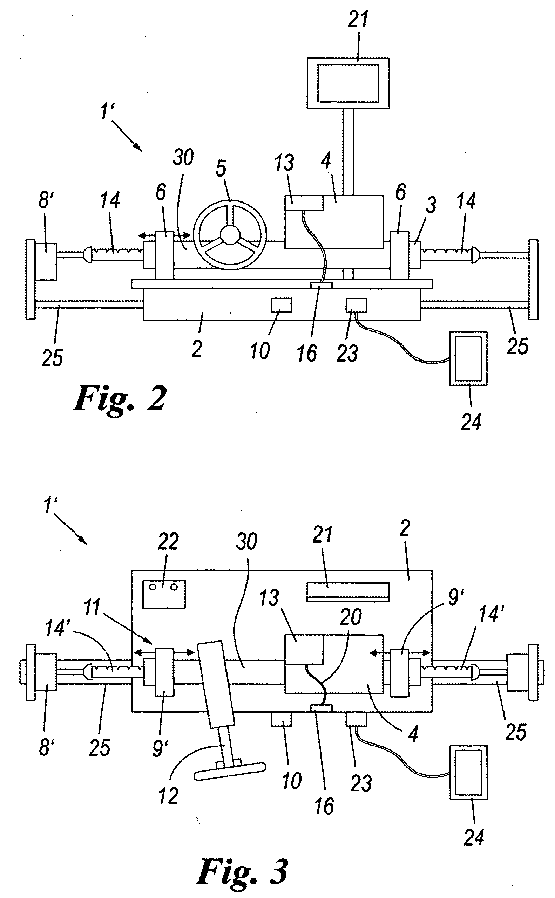

An alternative embodiment of the device 1 is shown in Figures 2 and 3. The same reference numerals indicate substantially identical parts that shall not be described any further; instead, reference numerals with a single quote mark indicate parts that are conceptually similar to those previously described.

The device 1' is conceptually identical to that previously described and works in the same manner. Nevertheless, it is adapted to test power steering units 11' where the motor 4 acts directly on a rack 30.

Essentially, the only difference to what has been previously described is that in this case, the means of sensing comprise a thrust sensor (for example, a load cell 8'), which detects a load instead of detecting torque. In addition, the device 2 incorporates extensible and mobile arms 25, equipped with an adjustable brake, which allow movement of the drive shafts 14' of power steering unit 11'. These arms are associated with translation sensors.

Obviously, the data stored by the system during the course of a test will not refer to rotation and torque, but force (thrust) and translation.

The control unit 10 of each of the above-described embodiments has a plurality of settings in memory that permit the simulation of the part of the onboard electronic system of a specific motor vehicle necessary for enabling the operation of the related controller provided in the power steering unit 11 and 11'. In particular, the data necessary for the simulation of the electrical system is input to the control unit 10 following analysis of the various car models. This data and settings can be updated with new car models, even automatically, by providing an Internet connection for the control unit for example, or using other known software update systems.

## Claims

1. Test device for electric power steering units (11) equipped with at least one electric drive motor (4), a controller (13) and sensor means for a command imparted by a user, said controller governing said electric motor based on data read from said sensors means, the device comprising a bed (2) equipped with means of clamping (6) said power steering unit, means of sensing (8) a force and/or movement generated by said power steering, power supply means for said electric motor and a control unit (10) able to interface with said controller, said control unit being able to simulate at least that part of the onboard electronic system of a motor vehicle suitable for being equipped with said power steering to allow the operation on the power steering as if it was installed on a real motor vehicle, **characterized in that** said control unit (10) has a plurality of settings in memory, each able to simulate at least the part of an onboard electronic system of a specific motor vehicle able to allow operation of the controller, said settings being selectable in function of the type of power steering mounted on the device, said controller (13) and said control unit (10) being interfaced by means of a specially provided cable (20), fitted with at least one connector able to connect with those originally provided on said power steering unit, and with an additional connector associated with said control unit, said means of fastening said power steering unit (6, 9) being adjustable in a manner such that the device can house a plurality of mutually different power steering units.

2. Device according to the previous claim in which said control unit (10) provides a socket (23) to enable the exchange of data between said controller (13), when connected to the control unit (10), and a standard diagnostics device (24) for motor vehicles.

3. Device according to claim 1, in which said means of sensing comprise a torque and/or rotation sensor (8) associated with a brake or a thrust sensor and/or motion sensors.

4. Device according to the previous claim in which the braking intensity is adjustable via said control unit (10) to which said brake is connected.

5. Device according to claim 1 in which said cable (20) has a chip with stored information regarding the power steering unit to which it can be associated, so that said control unit can signal possible errors in the choice of cable.

6. Device according to claim 1 in which said power supply means comprise a battery (22) for motor vehicles.

7. Device according to claim 1 in which a screen (21) interfaced with said control unit (10) is provided, the screen being able to display data regarding the test in course, said data regarding said controller (13) and/or the state of said means of sensing.

8. Device according to one or more of the previous claims in which an actuator is present that is able to drive the rotation of a steering shaft of said power steering unit according to a sequence that can be programmed via the control unit (10), so as to perform an operational test on the same power steering unit (11).

9. Device according to one or more of the previous claims in which the control unit (10) has a memory in which it saves the operating and/or check parameters of the power steering unit (11).

10. Device according to the previous claim in which said parameters are stored automatically during said programmable sequence.

11. Device according to one or more of the previous claims in which said control unit (10) is able to simulate one or more of the following states: power on/off, ignition on/off, engine on/off, City button on/off, variable speed from stationary to 200km/h.

12. Device according to one or more of the previous claims in which said control unit (10) is able to collect one or more of the following data items: effective steering angle, imparted steering angle, number of steering wheel turns, output torque, battery voltage, current absorbed by motor, output thrust and movement of steering arms.

13. Device according to one or more of the previous claims in which said control unit (10) is able to set the zero-angle of said controller (13) and/or the braking state of said brake from 0% to 100%.

## Patentansprüche

1. Prüfeinrichtung für elektrische Servolenkungseinheiten (11), ausgestattet mit mindestens einem elektrischen Antriebsmotor (4), einer Steuerung (13) sowie Sensorvorrichtungen für einen durch einen Benutzer erteilten Befehl, wobei die Steuerung den elektrischen Motor basierend auf von den Sensorvorrichtungen ausgelesenen Daten steuert, wobei die Einrichtung ein Unterteil (2) mit Spannvorrichtungen (6) zum Einspannen der Servolenkungseinheit, Sensorvorrichtungen (8) zum Messen einer durch die Servolenkungseinheit erzeugten Kraft und/oder Bewegung, Stromversorgungsvorrichtungen für den elektrischen Motor und eine Steuereinheit (10), die mit der Steuerung verbunden werden kann, wobei die Steuereinheit mindestens den für die Servolenkung relevanten Teil der Fahrzeugelektronik derart simulieren kann, dass der Betrieb der Servolenkung so möglich ist, als wäre sie in einem richtigen Fahrzeug verbaut, **dadurch gekennzeichnet, dass** in der Steuereinheit (10) eine Vielzahl von Einstellungen gespeichert sind, wobei jede mindestens den Teil einer Fahrzeugelektronik eines bestimmten Motorfahrzeugs simulieren kann, der den Betrieb der Steuerung ermöglicht, wobei die Einstellungen in Funktion des auf die Einrichtung aufgespannten Servolenkungstyps auswählbar sind,
wobei die Steuerung (13) und die Steuereinheit (10) mithilfe eines speziell bereitgestellten Kabels (20) miteinander verbunden sind, das mindestens einen Verbinder, der mit den Originalanschlüssen der Servolenkungseinheit verbunden werden kann, und einen zusätzlichen Verbinder, der mit der Steuereinheit verbunden ist, aufweist,
wobei die Vorrichtungen zur Befestigung der Servolenkungseinheit (6, 9) derart einstellbar sind, dass die Einrichtung eine Vielzahl von unterschiedlichen Servolenkungseinheiten aufnehmen kann.

2. Einrichtung nach dem vorhergehenden Anspruch, wobei die Steuereinheit (10) einen Anschluss (23) aufweist, die einen Datenaustausch zwischen der Steuerung (13), wenn sie mit der Steuereinheit (10) verbunden ist, und einer Standard-Diagnoseeinrichtung (24) für Motorfahrzeuge ermöglicht.

3. Einrichtung nach Anspruch 1, wobei die Sensorvorrichtungen einen Drehmoment- und/oder Rotationssensor (8), verbunden mit einer Bremse, oder einen Druckkraftsensor und/oder Bewegungssensor aufweist.

4. Einrichtung nach dem vorhergehenden Anspruch, wobei die Bremsintensität mithilfe der Steuereinheit (10) einstellbar ist, mit der die Bremse verbunden ist.

5. Einrichtung nach Anspruch 1, wobei das Kabel (20) einen Chip mit gespeicherten Informationen bezüglich der Servolenkungseinheit aufweist, mit der es verbunden werden kann, sodass die Steuereinheit mögliche Fehler bei der Kabelauswahl signalisieren kann.

6. Einrichtung nach Anspruch 1, wobei die Stromversorgungsvorrichtungen eine Batterie 1 (22) für Motorfahrzeuge umfasst.

7. Einrichtung nach Anspruch 1, wobei ein Bildschirm (21) verbunden mit der Steuereinheit (10) bereitgestellt ist, wobei der Bildschirm Daten bezüglich der laufenden Prüfung anzeigen kann, wobei die Daten die Steuerung (13) und/oder den Zustand der Sensorvorrichtungen betreffen.

8. Einrichtung nach einem oder mehreren der vorhergehenden Ansprüche, wobei ein Stellglied bereitgestellt ist, das die Rotation der Lenkwelle der Servolenkungseinheit gemäß einer Abfolge, die mithilfe der Steuerung (10) programmiert werden kann, steuern kann, um eine Betriebsprüfung an derselben Servolenkungseinheit (11) durchzuführen.

9. Einrichtung nach einem oder mehreren der vorhergehenden Ansprüche, wobei die Steuereinheit (10) einen Speicher aufweist, in dem sie die Betriebs- und/oder Prüfparameter der Servolenkungseinheit (11) speichert.

10. Einrichtung nach dem vorhergehenden Anspruch, wobei die Parameter automatisch während der programmierbaren Abfolge gespeichert werden.

11. Einrichtung nach einem oder mehreren der vorhergehenden Ansprüche, wobei die Steuereinheit (10) einen oder mehrere der folgenden Zustände simulieren kann: Strom ein/aus, Zündung ein/aus, Motor ein/aus, City-Taste ein/aus, variable Geschwindigkeit von Stillstand bis 200km/h.

12. Einrichtung nach einem oder mehreren der vorhergehenden Ansprüche, wobei die Steuereinheit (11) eines oder mehrere der folgenden Datenelemente erheben kann: tatsächlicher Lenkwinkel, übermittelter Lenkwinkel, Anzahl der Lenkradeinschläge, Ausgangsdrehmoment, Batteriespannung, Stromaufnahme des Motors, Ausgangsdruckkraft und Bewegung von Lenkhebeln.

13. Einrichtung nach einem oder mehreren der vorhergehenden Ansprüche, wobei die Steuereinheit (10) den Nullwinkel der Steuerung (13) und/oder den Bremszustand der Bremse von 0% auf 100% einstellen kann.

## Revendications

1. Dispositif d'essai pour unités de direction assistée électrique (11) équipé d'au moins un moteur d'entraînement électrique (4), d'un régulateur (13) et d'un moyen de capteur pour un ordre transmis par un utilisateur, ledit régulateur gouvernant ledit moteur électrique en se basant sur des données lues par ledit moyen de capteur, le dispositif comprenant un châssis (2) équipé d'un moyen de serrage (6) de ladite unité de direction assistée, d'un moyen de détection (8) d'une force et/ou d'un mouvement généré par ladite direction assistée, d'un moyen d'alimentation électrique pour ledit moteur électrique et d'une unité de régulation (10) capable de s'interfacer avec ledit régulateur, ladite unité de régulation étant capable de simuler au moins cette partie du système électronique embarqué d'un véhicule à moteur adapté pour être équipé de ladite direction assistée pour permettre le fonctionnement sur la direction assistée comme si elle était installée sur un vrai véhicule à moteur, **caractérisé en ce que**
ladite unité de régulation (10) a une pluralité de réglages en mémoire, chacun étant capable de simuler au moins la partie d'un système électronique embarqué d'un véhicule à moteur spécifique capable de permettre le fonctionnement du régulateur, lesdits réglages étant sélectionnables en fonction du type de direction assistée monté sur le dispositif,
ledit régulateur (13) et ladite unité de régulation (10) étant interfacés au moyen d'un câble fourni spécialement (20), doté d'au moins un connecteur capable de se connecter avec ceux fournis à l'origine sur ladite unité de direction assistée, et d'un connecteur supplémentaire associé à ladite unité de régulation,
ledit moyen de fixation (6, 9) de ladite unité de direction assistée étant réglable de manière à ce que le dispositif puisse loger une pluralité d'unités de direction assistée mutuellement différentes.

2. Dispositif selon la revendication précédente, dans lequel ladite unité de régulation (10) fournit une prise (23) pour permettre l'échange de données entre ledit régulateur (13), lorsqu'il est connecté à l'unité de régulation (10), et un dispositif de diagnostic standard (24) pour véhicules à moteur.

3. Dispositif selon la revendication 1, dans lequel ledit moyen de détection comprend un capteur de couple et/ou de rotation (8) associé à un frein ou un capteur de poussée et/ou des capteurs de mouvement.

4. Dispositif selon la revendication précédente, dans lequel l'intensité de freinage est réglable via ladite unité de régulation (10) à laquelle ledit frein est raccordé.

5. Dispositif selon la revendication 1, dans lequel ledit câble (20) comporte une puce avec des informations stockées concernant l'unité de direction assistée à laquelle il peut être associé, de sorte que ladite unité de régulation puisse signaler des erreurs possibles de choix de câble.

6. Dispositif selon la revendication 1, dans lequel ledit moyen d'alimentation électrique comprend une batterie (22) pour véhicules à moteur.

7. Dispositif selon la revendication 1, dans lequel un écran (21) interfacé à ladite unité de régulation (10) est fourni, l'écran étant capable d'afficher des données concernant l'essai en cours, lesdites données concernant ledit régulateur (13) et/ou l'état dudit moyen de détection.

8. Dispositif selon une ou plusieurs des revendications précédentes, dans lequel un actionneur est présent, qui est capable d'entraîner la rotation d'un arbre de direction de ladite unité de direction assistée selon une séquence qui peut être programmée via l'unité de régulation (10), de façon à réaliser un essai opérationnel sur la même unité de direction assistée (11).

9. Dispositif selon une ou plusieurs des revendications précédentes, dans lequel l'unité de régulation (10) comporte une mémoire dans laquelle elle sauvegarde les paramètres de fonctionnement et/ou de vérification de l'unité de direction assistée (11).

10. Dispositif selon la revendication précédente, dans lequel lesdits paramètres sont stockés automatiquement pendant ladite séquence programmable.

11. Dispositif selon une ou plusieurs des revendications précédentes, dans lequel ladite unité de régulation (10) est capable de simuler un ou plusieurs des états suivants : puissance en marche/arrêt, allumage en marche/arrêt, moteur en marche/arrêt, touche ville en marche/arrêt, vitesse variable de stationnaire à 200 km/h.

12. Dispositif selon une ou plusieurs des revendications précédentes, dans lequel ladite unité de régulation (10) est capable de recueillir un ou plusieurs des éléments de données suivantes : angle de braquage effectif, angle de braquage transmis, nombre de tours de volant de direction, couple de sortie, tension de batterie, courant absorbé par le moteur, poussée de sortie et mouvement des bras de direction.

13. Dispositif selon une ou plusieurs des revendications précédentes, dans lequel ladite unité de régulation (10) est capable de régler l'angle zéro dudit régulateur (13) et/ou l'état de freinage dudit frein de 0 % à 100 %.
